# EUROPÄISCHE PATENTSCHRIFT

(11) **EP 0 310 899 B1**
(45) Veröffentlichungstag und Bekanntmachung des Hinweises auf die Patenterteilung: **08.12.1993**
(21) Anmeldenummer: 88115756.4
(22) Anmeldetag: 24.09.1988
(51) Int. Cl.: A21C 1/10, A21D 8/02

(54) **Verfahren zum Herstellen eines Brotteiges**
Method of producing bread dough
Méthode de production de pâte à pain

(30) Priorität: 06.10.1987 DE 3733689
(43) Veröffentlichungstag der Anmeldung: 12.04.1989
(73) Patentinhaber: Lieken-Batscheider Mühlen- und Backbetriebe GmbH, D-55120 Mainz (DE)
(72) Erfinder: Schäfer, Roland, D-8024 Deisenhofen (DE); Flüss, Hermann, D-8156 Otterfing (DE); Hartwig, Manfred, D-8000 München 90 (DE)
(74) Vertreter: Goddar, Heinz J., Dr.

(56) Entgegenhaltungen:
- EP-A- 0 022 989
- DE-B- 2 812 544
- DE-C- 556 943
- US-A- 2 326 134

## Beschreibung

Die Erfindung betrifft ein Verfahren zum Herstellen eines Brotteiges oder dergl., insbesondere für Knäckebrot, bei dem die zur Teigherstellung vorgesehenen Getreidekörner, ggf. unter oder nach einer vorzugsweise enzymatischen Vorbehandlung, feinzerkleinert und zusammen mit den übrigen Teigbestandteilen unter Zugabe von Wasser oder dergl. Gasen, wie Luft, Stickstoff und/oder Kohlendioxid, zu einer Teigmasse schaumartiger Konsistenz verarbeitet werden.

Für die Herstellung von Knäckebrotteigen sind im wesentlichen zwei verschiedene Verfahren bekannt, die sich vor allem durch die Art der Teiglockerung unterscheiden. Diese erfolgt entweder durch Kohlendioxidbildung auf fermentativem Wege oder, wie bei dem gattungsgemäßen Verfahren, durch Einschlagen von Luft.

Für das zweitgenannte Verfahren, das auch als Eis-Verfahren bezeichnet wird, ist es erforderlich, den Teig zu kühlen, um vor allem sein Gashaltevermögen zu stabilisieren. Die Kühlung kann entweder direkt durch Zugabe von Eis zum Teig oder indirekt durch Kühlen des Teigs mit einem Wärmetauscher erfolgen. In beiden Fällen wird der Teig auf eine Temperatur von ca. 2-8° C gekühlt. Als Mahlgut werden meistens mittelfeine Vollkornschrote verwendet, die durch Trockenvermahlen von Getreidekörnern über mehrere Mahlpassagen hergestellt werden. Die angegebene Mahlfeinheit ist erforderlich, um dem Teig eine weiche, samtartige Konsistenz zu geben.

Bei einer besonderen Ausführungsform diese Verfahrens wird das Getreide nach der in der DE-B-29 21 682 beschriebenen Lehre vor dem Vermahlen durch Anfeuchten aktiviert, um seine Inhaltsstoffe in einen für die Ausbildung bestimmter Qualitätsmerkmale reaktiven Zustand zu versetzen. Nach der Aktivierung, die als Vitalisierung des ruhenden, lebensfähigen Korns anzusehen ist, muß eine schonende Rücktrocknung des Getreides erfolgen, um es vermahlen zu können. Die Vermahlungstechnik entspricht der im vorgenanntn Beispiel beschriebenen. In beiden Fällen ist sie mit einer enormen Oberflächenvergrößerung sowie der Zerstörung des für die Auskeimung der Körner notwendigen biologischen Ordnungszustands verbunden, so daß nunmehr Veränderungen in der Mahlgutmasse vorkommen können, unter denen die oxidativen besonders hervorzuheben sind. Sie führen vor allem bei verlängerter Lagerung der Schrote zu deren Ranzigwerden. Dieser Vorgang ist mit einem Aufbrauchen der natürlich vorkommenden Antioxidantien verbunden, darunter den Tocopherolen.

Die Oxidationsvorgänge werden in der Teigphase durch das Einschlagen von Luft und die Wirkung des korneigenen Enzyms Lipoxigenase begünstigt. Sie können nur dadurch in den für eine gute Gebäckqualität notwendigen Grenzen gehalten werden, daß die Teige gekühlt werden, wodurch die Geschwindigkeit abgesenkt wird. Das Kühlen wirkt sich ganz allgemein in einer Verlangsamung aller chemischen Reaktionen aus, von denen aber einige sowohl aus Gründen der Ausbildung der sensorischen wie auch der ernährungsphysiologischen Qualitätsmerkmale durchaus in stärkerem Umfang ablaufen sollten. Darunter sind beispielsweise der hydrolytische Abbau der Pentosane durch die korneigenen Pentosanasen unter sensorischen und der Abbau der Phytate durch die ebenfalls korneigene Phytase unter ernährungsphysiologischen Gesichtspunkten zu nennen. Der Abbau der Pentosane führt bei gleichzeitigem Erhalt der Festigkeit der Scheiben zu einer zarten Krumenstruktur und durch den Abbau des Phytats erfolgt eine deutliche Verbesserung der Mineralstoffresorption.

Die wünschenswerten Reaktionen können aber nur dann ablaufen gelassen werden, wenn der Teig erheblich wärmer geführt wird. Eine solche Maßnahme wird jedoch allein wegen des stark negativen Einflusses einer höheren Teigführungstemperatur auf die Schaumstruktur der nach dem genannten Verfahren hergestellten Teige nicht getroffen.

Trotz dieser Nachteile erfreuen sich die Eis-Knäckebrote vor allem wegen ihres milden Geschmacks und hoher Bekömmlichkeit einer großen Beliebtheit unter diesen Backwaren.

Zwar weisen die aus fermentierten Teigen hergestellten Backwaren die vorgenannten Nachteile nicht in gleicher Weise auf, sie unterscheiden sich aber aufgrund der Herstellungsweise insbesondere in ihren sensorischen Merkmalen von Eis-Knäckebroten so erheblich, daß sie als eine von diesen deutlich verschiedene Produktgruppe aufzufassen sind.

Die vorliegende Erfindung bezieht sich deshalb weniger auf diese letztgenannte Produktgruppe, wenngleich es aufgrund der Variation der Arbeitsparameter des erfindungsgemäßen Verfahrens möglich ist, auch auf nicht fermentativem Wege Knäckebrote herzustellen, die in den meisten ihrer kennzeichnenden Qualitätsmerkmale denen aus fermentierten Teigen hergestellten entsprechen oder doch weitgehend ähnlich sein können.

Zum Stand der Technik ist ferner auszuführen, daß es bekannt ist, durch geeignete Teigführungsmaßnahmen den Abbau der Pentosane sowie deren oxidative Gelierung vor allem in Teigen aus Roggenmahlprodukten so zu beeinflussen, daß daraus nach fermentativer Lockerung der Teige Dauerbackwaren ansprechender sensorischer Qualitätsmerkmale gebacken werden können (Meuser, F. und Suckow, P.: "Backtechnische Wirkung von Roggenpentosanen", Getreide, Mehl und Brot 40 (1986), 332-336). Durch die Teigführungsmaßnahmen werden vor allem die Eigenschaften der Teiginhaltsstoffe, die zu harten, dichten und splittrigen Gebäcken führen so verändert, daß zarte und voluminöse Gebäcke entstehen. Soweit es sich dabei um Roggenbackwaren handelt, schmecken diese auch weniger bitter als Backwaren, die nach bisher bekannten Verfahren hergestellt werden. Die Absenkung des Bittergeschmacks hängt ebenfalls mit den ablaufenden enzymatischen und oxidativen Veränderungen der Teiginhaltsstoffe zusammen.

In bezug auf oxidative Veränderungen im Teig, insbesondere solchen aus Roggenmahlprodukten, ist außerdem zu erwähnen, daß es durch die CH-B-417 506 bereits bekannt ist, neben Luft auch andere Gase, wie Stickstoff und Kohlendioxid, zu verwenden. Damit können oxidative Veränderungen durchaus in ihrer Wirkung begrenzt werden. Die Anwendung solcher Gase ist aber aufgrund des langsamen Ablaufs oxidativer Reaktionen in gekühlten Teigen weniger erforderlich. Das gilt selbstverständlich dann nicht mehr, wenn die Teige zur Erzielung besonderer enzymatischer Reaktionen warm geführt werden müssen.

Der Erfindung liegt die Aufgabe zugrunde, das gattungsgemäße Verfahren dahingehend weiterzubilden, daß der zur insbesondere Knäckebrot-Herstellung dienenden Schaumteigmasse eine definierte Viskosität mit einstellbarem Luft- bzw. Gasgehalt unter gesteuerter Oxidierung der Getreidebestandteile verliehen werden kann.

Erfindungsgemäß wird diese Aufgabe dadurch gelöst, daß die Getreidekörner vor der Feinzerkleinerung in eine sie im wesentlichen allseits gegen Umgebungsluft abschließende Schutzflüssigkeit, vorzugsweise im wesentlichen aus Wasser bestehend, eingebracht und in dieser Suspension nach und/oder unter dosierter Zugabe eines Lockerungsgases einstellbarer Zusammensetzung feinzerkleinert und zu der Schaumteigmasse verarbeitet werden.

Dabei kann vorgesehen sein, daß die Getreidekörner vor der Suspensionserzeugung grob vorzerkleinert werden.

Eine weitere Ausführungsform der Erfindung schlägt vor, daß die Vorzerkleinerung im Naßmahlverfahren erfolgt.

Bei dem erfindungsgemäßen Verfahren kann ferner so vorgegangen werden, daß die Feinzerkleinerung durch Hochdruckhomogenisierung unter gleichzeitigem Aufschließen des Getreideendosperns und homogener Durchsetzung der gebildeten Schaumteigmasse mit Gasblasen erfolgt.

Dabei kann vorgesehen sein, daß die Hochdruckhomogenisation unter einem Druck von 50 bis 150 bar erfolgt.

Eine weitere Ausführungsform der Erfindung schlägt vor, daß die Hochdruckhomogenisation bei einer Temperatur von 5 bis 45° C erfolgt.

Auch kann erfindungsgemäß vorgesehen sein, daß die Suspension vor dem Einleiten in den Hochdruckhomogenisator mit Lockerungsgas angereichert wird.

Nach der Erfindung kann auch so vorgegangen werden, daß der pH-Wert der Suspension auf einen Bereich von 5,2 bis 5,5 eingestellt wird.

Die Erfindung schlägt ferner vor, daß die Suspension vor der Feinzerkleinerung durch eine Verweilzeitstrecke geführt wird.

Dabei kann auch so vorgegangen werden, daß die Suspension über eine Verweilzeit von 30 bis 60 Minuten eine Temperatur von 50 bis 55° C besitzt.

Eine weitere Ausführungsform der Erfindung ist dadurch gekennzeichnet, daß die Suspension nach dem Verweilen bei der Temperatur von 50 bis 55° C auf einer Temperatur von 35 bis 45° C gekühlt und bei dieser Temperatur über eine weitere Verweilzeit von 5 bis 11 Stunden gehalten wird.

Dabei kann vorgesehen sein, daß die Suspension über eine Verweilzeit von 6 bis 12 Stunden einer Temperatur von 35 bis 45° C besitzt.

Eine weitere Ausführungsform der Erfindung schlägt vor, daß die Suspension vor der Hochdruckhomogenisierung auf eine Temperatur von 5 bis 45° C gekühlt wird.

Auch kann erfindungsgemäß so vorgegangen werden, daß die Getreidekörner über 3 bis 12 Stunden einer Druckquellung mit Wasser bei einer Temperatur von 40 bis 60° C unterworfen werden.

Schließlich schlägt die Erfindung in Weiterbildung dieser Ausführungsform auch vor, daß der pH-Wert des Quellwassers durch Milchsäurebakterien abgesenkt wird.

Bei dem erfindungsgemäßen Verfahren handelt es sich also um die Hochdruckhomogenisierung von in geeigneter Weise vorbehandelten Getreidekörnern mit Flüssigkeiten und Gasen zu einer Masse schaumartiger Konsistenz, die beispielsweise als Teig zu Knäckebroten gebacken werden kann. Die Zerkleinerung der Getreidekörner wird dabei in den Vorgang der Teigbildung so integriert, daß die Getreide-, respektive die Teiginhaltsstoffe, einschließlich der Gase, über den gesamten Vorgang der Zerkleinerung und Teigbildung ein Reaktionsmilieu bilden, in welchem chemische Reaktionen zur vorbereitenden Ausbildung vorteilhafter Qualitätsmerkmale der Backwaren gezielt ablaufen gelassen werden können. Ein Oxidieren des Getreides bei der Feinzerkleinerung wird durch die Schutzflüssigkeit vermieden, wobei es in diesem Zusammenhang natürlich besonders vorteilhaft ist, wenn auch die Grobzerkleinerung, die ggf. vorangeht, bereits im Naßmahlverfahren erfolgt. Im Homogenisator erfolgt dann der weitere Schutz der Getreidebestandteile gegen untunlich starke Oxidation durch Zufuhr des als Schutzgas wirkenden Lockerungsgases definierter Zusammensetzung, beispielsweise also lediglich mit einem Sauerstoffgehalt von ca. 5%, wobei die Zusammensetzung und die Menge des Schutz- bzw. Lockerungsgases so gewählt werden, daß im herzustellenden Teig eine gezielte, definierte Oxidierung der Getreidebestandteile stattfindet, woraus wiederum eine definierte Viskosität und ein definierter Luft- bzw. Gasgehalt der fertigen Schaumteigmasse resultieren. Sofern die Hochdruckhomogenisation unter hinreichend starkem Druck erfolgt, kann der Teig beispielsweise aus Spaltdüsen herausgedrückt werden.

Der Erfindung liegt die überraschende Erkenntnis zugrunde, daß es gelingt, den Feststoffanteil einer pumpfähigen Suspension aus grob vorzerkleinerten Getreidekörnern und Wasser im Desintegrationsventil eines Hochdruckhomogenisators so zu zerkleinern, aufzuschließen und mit Gas zu durchsetzen, daß ein voluminöser, gasgelockerter Teig entsteht, in welchem Gasblasen vollständig homogen und fein verteilt vorliegen. Die Zerkleinerung und der Aufschluß der vorzerkleinerten Getreidekornmasse gelingt dabei so vollständig, daß der Teig die gewünschte samtartige Teigkonsistenz annimmt. Diese hängt von der Größe der entstehenden Partikel und deren Quellzustand ab, die beide durch die Wahl der Arbeitsparameter im Gesamtverfahrensablauf in weiten Grenzen beeinflußt werden können.

Damit sind die Voraussetzungen dafür geschaffen, den gesamten Vorgang der Zerkleinerung der Getreidekörner und der Teigbildung in einem Reaktionsmilieu kontinuierlich in einem geschlossenen System ablaufen lassen zu können.

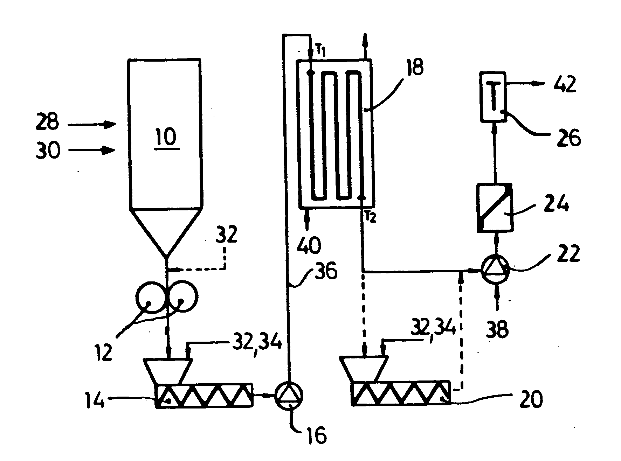

Weitere Merkmale und Vorteile der Erfindung ergeben sich aus der nachstehenden Beschreibung, in der ein Ausführungsbeispiel anhand der schematischen, aus einer einzigen Figur bestehenden Zeichnung, die ein Fliesschema für die Herstellung eines gasgelockerten Teiges nach der Erfindung darstellt, beschrieben ist.

In der Zeichnung ist eine Anlage skizziert, mit der kontinuierlich Teig (500 kg/h) aus Vollkorn (Roggen), Wasser und anderen Zutaten hergestellt werden kann. Die Anlage weist einen Vorratsbehälter 10, eine Trocken-oder Naßmühle 12, einen ersten Mischer 14, eine Pumpe 16, einen Fermenter 18, einen zweiten Mischer 20, eine weitere Pumpe 22, ein Mischelement 24 sowie einen Homogenisator 26 auf. Genetzte Roggenkörner (220 kg/h) 28 werden dem Vorratsbehälter 10, der in der in der DE-B-29 21 682 beschriebenen Weise als Aktivierungsbehälter oder, wie in Meuser, F. Wittig, J., Huster, H. u. Holley, W. "Neue verfahrenstechnische Wege zur Stärkegewinnung aus stärkehaltigen Rohstoffen", Intern. Zeitschrift für Lebensmitteltechnologie und -verfahrenstechnik 37 (1986), 535-541, beschriebenen Weise als Druckquellsäule ausgebildet sein kann, entnommen und entweder durch Trocken- oder Naßzerkleinerung in der Trocken- oder Naßmühle 12 grob vorzerkleinert. Das Mahlgut 30 (Flocken oder Schrot) wird danach, oder im Falle der Naßvermahlung dabei, mit temperiertem, gegebenenfalls genußsäurehaltigem Wasser 32 (280 l/h, 60° C) gemischt. Es entsteht eine teigartige, pumpfähige Suspension 36. Die ggf. über das Wasser in die Suspension eingebrachte Genußsäuremenge (z. B. Milch- oder Zitronensäure) ist so bemessen, daß der für die gewünschte enzymatische Reaktion optimale pH-Wert erreicht wird. Im Falle der Phytinsäurehydrolyse beträgt er 5,2 - 5,5. Die Suspension kann in dem nachgeschalteten Mischer 14 mit weiteren Rezepturbestandteilen, wie Flüssigkeit 32 und Mehl, Salz etc. 34 versetzt werden. Sie wird anschließend mit Hilfe der Pumpe 16 durch den Rohrfermenter 18 geleitet. Durch Steuerung der Temperatur und der Verweilzeit der Masse in dem Fermenter wird erreicht, daß die gewünschten enzymatischen Reaktionen ablaufen können. Es versteht sich von selbst, daß der Fermenter auch eine andere Bauausführung haben kann als der hier beschriebene Rohrfermenter. Beispielsweise kann er aus hintereinander geschalteten Tanks bestehen.

Das Ausmaß der enzymatischen Reaktionen richtet sich vor allem nach der im Rohstoff vorhandenen Enzymaktivität. Ist diese hoch, kann die Verweilzeit im Fermenter kurz sein, umgekehrt ist sie bei einer niedrigen Enzymaktivität lang zu wählen. Beispielsweise genügt für die Hydrolyse der Phytinsäure auf ca. 20% vom Ausgangswert im allgemeinen eine Verweilzeit von max. 60 min bei 55° C. Demgegenüber verläuft der Abbau der Pentosane mit den korneigenen Pentosanasen vorteilhaft bei etwa 40° C, wobei der für das Erreichen einer großen Zartheit der Gebäckstruktur notwendige hydrolytische Abbau eine Verweilzeit bis zu 12 h erforderlich machen kann. Gleichzeitig werden dabei, ebenfalls durch enzymatischen Abbau verursacht, niederpolymere Kohlenhydrate und Proteinabbauprodukte angehäuft, was sich positiv auf die Geschmackstoffbildung beim Backen auswirkt.

Aus dem vorher Gesagten ergibt sich, daß die Arbeitsparameter in bezug auf die Ausbildung bestimmter Qualitätsmerkmale der Backwaren in weiten Grenzen variiert werden können. Diesbezüglich ist es besonders erwähnenswert, daß die Temperaturführung der Suspension im Fermenter ("T₁" nach "T₂") durch abschnittsweise Unterteilung des Temperiermantels variabel gestaltet werden kann.

Die Suspension wird vor Austritt aus dem Fermenter nur soweit gekühlt, daß der nach der Hochdruckhomogenisierung aus ihr gebildete Teig leicht weiterverarbeitet werden kann.

Die Anreicherung der Suspension mit Gas und deren Hochdruckhomogenisierung stellt den letzten Schritt in der Teigbereitung dar. Dazu wird die Suspension mit der Pumpe 22 zunächst durch das Mischelement 24 geleitet. Bezüglich dieses Fördervorgangs ist die Förderleistung der Pumpe 22 vor dem Mischelement 24 etwas größer als die der Pumpe 16 vor dem Rohrfermenter 18, so daß gemäß der in der CH-PS 417 506 beschriebenen Lehre Gas in die Suspension 36 eingebracht wird. Die Feinverteilung des Gases in der Suspension erfolgt im Sinne der Ausbildung eines feinporigen Schaums zusammen mit der weiteren Zerkleinerung der Getreidepartikel im Ventil des Homogenisators 26 bei etwa 100 bar. Durch Wahl des Massestroms und des Drucks sowie des Druckabfalls im Ventil kann in Abhängigkeit von der gewünschten Gebäckstruktur die Dichte des entstehenden gasgelockerten Teigs 42, also der für die Brotherstellung bestimmten Schaumteigmasse, eingestellt werden; sie kann beispielsweise 0,4 g/ml betragen. Zur weiteren Anreicherung der Suspension 36 mit Feststoffen 34 und Flüssigkeiten 32 kann hinter dem Rohrfermenter ein weiterer Mischer angebracht sein, wobei der Mantel des Hochdruckhomogenisators durch ein Temperiermedium 40 in seiner Temperatur steuerbar ist.

Ein besonderer Vorteil der Erfindung besteht darin, daß durch die Hochdruckhomogenisierung die Feststoffpartikel in der Suspension soweit zerkleinert und aufgeschlossen sowie mit Gas (Luft, Stickstoff, Kohlendioxid) durchsetzt werden, daß ein homogener, gasgelockerter Teig samtartiger Konsistenz entsteht. In Verbindung mit einer vorausgegangenen enzymatischen Behandlung der Suspension können aus dem Teig Knäckebrote und ähnliche Dauerbackwaren gebacken werden, die sich durch eine zartsplittrige Krume, einen aromatischmilden Geschmack und vorteilhafte ernährungsphysiologische Eigenschaften auszeichnen. Die Zerkleinerung des Rohstoffs und die Teigbildung erfolgen in einem einzigen geschlossenen Reaktionsmilieu, in welchem durch die getreideeigenen Enzyme katalysierbare Reaktionen zur Verbesserung der Endproduktqualität durch Wahl der Arbeitsparameter Verweilzeit, Feststoffkonzentration, Rezepturzusammensetzung und Temperatur gezielt ablaufen gelassen werden können. Der gesamte Verfahrensablauf kann praktisch unter Ausschluß von Luftsauerstoff erfolgen, so daß unerwünschte Oxidationsreaktionen weitgehend ausgeschlossen werden.

## Patentansprüche

1. Verfahren zum Herstellen eines Brotteiges oder dergl., insbesondere für Knäckebrot, bei dem die zur Teigherstellung vorgesehenen Getreidekörner, ggf. unter oder nach einer vorzugsweise enzymatischen Vorbehandlung, feinzerkleinert und zusammen mit den übrigen Teigbestandteilen unter Zugabe von Wasser oder dergl., Gasen, wie Luft, Stickstoff und/oder Kohlendioxid, zu einer Teigmasse schaumartiger Konsistenz verarbeitet werden, dadurch gekennzeichnet, daß die Getreidekörner vor der Feinzerkleinerung in eine sie im wesentlichen allseits gegen Umgebungsluft abschließende Schutzflüssigkeit, vorzugsweise im wesentlichen aus Wasser bestehend, eingebracht und in dieser Suspension nach und/oder unter dosierter Zugabe eines Lockerungsgases einstellbarer Zusammensetzung feinzerkleinert und zu der Schaumteigmasse verarbeitet werden.

2. Verfahren nach Anspruch 1, dadurch gekennzeichnet, daß die Getreidekörner vor der Suspensionserzeugung grob vorzerkleinert werden.

3. Verfahren nach Anspruch 2, dadurch gekennzeichnet, daß die Vorzerkleinerung im Naßmahlverfahren erfolgt.

4. Verfahren nach einem der vorangehenden Ansprüche, dadurch gekennzeichnet, daß die Feinzerkleinerung durch Hochdruckhomogenisierung unter gleichzeitigem Aufschließen des Getreideendosperms und homogener Durchsetzung der gebildeten Schaumteigmasse mit Gasblasen erfolgt.

5. Verfahren nach Anspruch 4, dadurch gekennzeichnet, daß die Hochdruckhomogenisation unter einem Druck von 50 bis 150 bar erfolgt.

6. Verfahren nach Anspruch 4 oder 5, dadurch gekennzeichnet, daß die Hochdruckhomogenisation bei einer Temperatur von 5 bis 45° C erfolgt.

7. Verfahren nach einem der Ansprüche 4 bis 6, dadurch gekennzeichnet, daß die Suspension vor dem Einleiten in den Hochdruckhomogenisator mit Lockerungsgas angereichert wird.

8. Verfahren nach einem der vorangehenden Ansprüche, dadurch gekennzeichnet, daß der pH-Wert, der Suspension auf einen Bereich von 5,2 bis 5,5 eingestellt wird.

9. Verfahren nach einem der vorangehenden Ansprüche, dadurch gekennzeichnet, daß die Suspension vor der Feinzerkleinerung durch eine Verweilzeitstrecke geführt wird.

10. Verfahren nach Anspruch 9, dadurch gekennzeichnet, daß die Suspension über eine Verweilzeit von 30 bis 60 Minuten eine Temperatur von 50 bis 55° C besitzt.

11. Verfahren nach Anspruch 10, dadurch gekennzeichnet, daß die Suspension nach dem Verweilen bei der Temperatur von 50 bis 55° C auf einer Temperatur von 35 bis 45° C gekühlt und bei dieser Temperatur über eine weitere Verweilzeit von 5 bis 11 Stunden gehalten wird.

12. Verfahren nach Anspruch 9, dadurch gekennzeichnet, daß die Suspension über eine Verweilzeit von 6 bis 12 Stunden einer Temperatur von 35 bis 45° C besitzt.

13. Verfahren nach einem der Ansprüche 4 bis 12, dadurch gekennzeichnet, daß die Suspension vor der Hochdruckhomogenisierung auf eine Temperatur von 5 bis 45° C gekühlt wird.

14. Verfahren nach einem der vorangehenden Ansprüche, dadurch gekennzeichnet, daß die Getreidekörner über 3 bis 12 Stunden einer Druckquellung mit Wasser bei einer Temperatur von 40 bis 60° C unterworfen werden.

15. Verfahren nach Anspruch 14, dadurch gekennzeichnet, daß der pH-Wert des Quellwassers durch Milchsäurebakterien abgesenkt wird.

## Claims

1. A process for the production of a bread dough or the like, more particularly for crispbread, in which the cereal grains intended for the dough production are finely comminuted, if required during or after a preferably enzymatic pretreatment, and processed together with the other dough ingredients, with the addition of water or the like, gases, such as air, nitrogen and/or carbon dioxide, to form a dough material of foamy consistency, characterised in that before fine-comminution the cereal grains are introduced into a protective liquid, consisting preferably substantially of water, such liquid substantially shielding them completely from the ambient air, and are finely comminuted in this suspension after and/or during metered addition of an aerating gas of adjustable composition, and processed to form the foamy dough material.

2. A process according to claim 1, characterised in that the cereal grains are coarsely pre-comminuted before the production of the suspension.

3. A process according to claim 2, characterised in that the pre-comminution is carried out by a wet milling process.

4. A process according to any one of the preceding claims, characterised in that the fine comminution is effected by high-pressure homogenisation with simultaneous opening up of the cereal endosperm and homogeneous introduction of gas bubbles throughout the resulting foamy dough material.

5. A process according to claim 4, characterised in that the high-pressure homogenisation is carried out at a pressure of from 50 to 150 bar.

6. A process according to claim 4, characterised in that the high-pressure homogenisation is carried out at a temperature of 5 to 45°C.

7. A process according to any one of claims 4 to 6, characterised in that the suspension is enriched with aerating gas before it is introduced into the high-pressure homogeniser.

8. A process according to any one of the preceding claims, characterised in that the pH value of the suspension is adjusted to a range from 5.2 to 5.5.

9. A process according to any one of the preceding claims, characterised in that the suspension is passed through a residence-time zone before fine-comminution.

10. A process according to claim 9, characterised in that the suspension has a temperature of 50 to 55°C over a residence time of 30 to 60 minutes.

11. A process according to claim 10, characterised in that after residence at the temperature of 50 to 55°C the suspension is cooled to a temperature of 35 to 45°C and is held at this temperature for a further residence time of 5 to 11 hours.

12. A process according to claim 9, characterised in that the suspension has a temperature of 35 to 45°C over a residence time of 6 to 12 hours.

13. A process according to any one of claims 4 to 12, characterised in that the suspension is cooled to a temperature of 5 to 45°C before high-pressure homogenisation.

14. A process according to any one of the preceding claims, characterised in that the cereal grains are subjected to pressure steeping with water at a temperature of 40 to 60°C for a period of 3 to 12 hours.

15. A process according to claim 14, characterised in that the pH value of the steeping water is reduced by lactic acid bacteria.

## Revendications

1. Procédé de fabrication de pâte à pain ou analogue, en particulier pour du pain croustillant, dans lequel les grains de céréales prévus pour la fabrication de la pâte sont finement broyés, le cas échéant simultanément ou postérieurement à un prétraitement de préférence enzymatique, et mis en oeuvre avec les autres ingrédients de la pâte en ajoutant de l'eau ou des gaz, tels que de l'air, de l'azote et/ou du gaz carbonique, pour obtenir une masse de pâte de consistance mousseuse, caractérisé en ce que, préalablement au broyage fin, les grains de céréales sont plongés dans un liquide protecteur, de préférence constitué essentiellement d'eau, qui les isole de l'air ambiant sensiblement de toutes parts, broyés finement dans cette suspension après et/ou pendant l'apport dosé d'un gaz assouplissant de composition modulable, et travaillés pour obtenir la masse de pâte mousseuse.

2. Procédé selon la revendication 1, caractérisé en ce que les grains de céréales font l'objet d'un prébroyage sommaire avant la réalisation de la suspension.

3. Procédé selon la revendication 2, caractérisé en ce que le prébroyage s'effectue par un procédé de mouture humide.

4. Procédé selon l'une des revendications précédentes, caractérisé en ce que le broyage fin est effectué par homogénéisation à haute pression, avec désagrégation simultanée de l'endosperme du grain et incorporation homogène de bulles de gaz dans la masse de pâte mousseuse formée.

5. Procédé selon la revendication 4, caractérisé en ce que l'homogénéisation à haute pression s'effectue à une pression de 50 à 150 bars.

6. Procédé selon la revendication 4 ou 5, caractérisé en ce que l'homogénéisation à haute pression s'effectue à une température de 5 à 45 °C.

7. Procédé selon l'une des revendications 4 à 6, caractérisé en ce que la suspension est enrichie en gaz assouplissant avant son entrée dans l'homogénéisateur à haute pression.

8. Procédé selon l'une des revendications précédentes, caractérisé en ce que le pH de la suspension est compris dans une plage de 5,2 à 5,5.

9. Procédé selon l'une des revendications précédentes, caractérisé en ce que, préalablement au broyage fin, la suspension traverse un parcours de temps de séjour.

10. Procédé selon la revendication 9, caractérisé en ce que la suspension possède une température de 50 à 55 °C pendant un temps de séjour de 30 à 60 minutes.

11. Procédé selon la revendication 10, caractérisé en ce que, au terme du séjour à une température de 50 à 55 °C, la suspension est refroidie à une température de 35 à 45 °C et maintenue à cette température pendant un autre temps de séjour de 5 à 11 heures.

12. Procédé selon la revendication 9, caractérisé en ce que la suspension possède une température de 35 à 45 °C pendant un temps de séjour de 6 à 12 heures.

13. Procédé selon l'une des revendications 4 à 12, caractérisé en ce que la suspension est refroidie à une température de 5 à 45 °C avant l'homogénéisation à haute pression.

14. Procédé selon l'une des revendications précédentes, caractérisé en ce que les grains de céréales sont soumis, pendant 3 à 12 heures, à un gonflement sous pression avec de l'eau à une température de 40 à 60 °C.

15. Procédé selon la revendication 14, caractérisé en ce que le pH de l'eau de gonflement est abaissé par des bactéries de l'acide lactique.
